# NEUE EUROPÄISCHE PATENTSCHRIFT

(11) **EP 0 862 947 B2**
(45) Veröffentlichungstag und Bekanntmachung des Hinweises auf die Entscheidung über den Einspruch: **05.09.2007**
(45) Hinweis auf die Patenterteilung: 23.04.2003
(21) Anmeldenummer: 98102671.9
(22) Anmeldetag: 17.02.1998
(51) Int. Cl.: B01J 27/26, C08G 18/48, C08G 65/26

(54) **Verfahren zur Herstellung von Doppelmetallcyanidkatalysatoren und Verfahren zur Herstellung von Polyetheralkoholen**
Process for the preparation of DMC catalyst and process for preparing polyetheralcohols
Procédé pour la préparation de catalyseurs du type DMC et procédé pour la préparation de polyétheralcools

(30) Priorität: 06.03.1997 DE 19709031
(43) Veröffentlichungstag der Anmeldung: 09.09.1998
(73) Patentinhaber: BASF Aktiengesellschaft, 67056 Ludwigshafen (DE)
(72) Erfinder: Grosch, Georg Heinrich, Dr., 67098 Bad Dürkheim (DE); Larbig, Harald, Dr., 67063 Ludwigshafen (DE); Junge, Dieter, 67227 Frankenthal (DE); Geelen, Daniella, Dr., 2900 Schoten (BE); de Vocht, Peter, 2520 Emblem (BE); Hoeppner, Gerd, 01987 Schwarzheide (DE)

(56) Entgegenhaltungen:
- EP-A- 0 755 716
- DD-A- 148 957
- US-A- 5 482 908
- US-A- 5 525 565
- R.J. Herold, Macromolecular Synthesis, vol.5,1974, pp:9-13

## Beschreibung

Die Erfindung betrifft ein Verfahren zur Herstellung von Doppelmetallcyanidkatalysatoren, die zur Herstellung von Polyetheralkoholen mit einem niedrigen Gehalt an ungesättigten Bestandteilen eingesetzt werden können.

Polyetheralkohole werden in großen Mengen zur Herstellung von Polyurethanen eingesetzt. Ihre Herstellung erfolgt zumeist durch katalytische Anlagerung von niederen Alkylenoxiden, insbesondere Ethylenoxid und Propylenoxid, an H-funktionelle Startsubstanzen. Als Katalysatoren werden zumeist basische Metallhydroxide oder Salze verwendet, wobei das Kaliumhydroxid die größte praktische Bedeutung hat.

Bei der Synthese von Polyetheralkoholen mit langen Ketten, wie sie besonders zur Herstellung von Polyurethan-Weichschäumen eingesetzt werden, kommt es bei fortschreitendem Kettenwachstum zu Nebenreaktionen, die zu Störungen im Kettenaufbau führen. Diese Nebenprodukte werden als ungesättigte Bestandteile bezeichnet und führen zu einer Beeinträchtigung der Eigenschaften der resultierenden Polyurethane. Es hat daher in der Vergangenheit nicht an Versuchen gefehlt, Polyetheralkohole mit einem niedrigen Gehalt an ungesättigten Bestandteilen bereitzustellen. Hierzu werden insbesondere die eingesetzten Alkoxylierungskatalysatoren gezielt verändert. So wird in EP-A-268 922 vorgeschlagen, Cäsiumhydroxid einzusetzen. Damit kann zwar der Gehalt an ungesättigten Anteilen gesenkt werden, Cäsiumhydroxid ist jedoch teuer und problematisch zu entsorgen.

Weiterhin ist die Verwendung von Multimetallcyanidkomplex-Verbindungen, zumeist Zinkhexacyanometallaten, zur Herstellung von Polyetheralkoholen mit niedrigen Gehalten an ungesättigten Bestandteilen bekannt. Es gibt eine große Zahl von Dokumenten, die die Herstellung derartiger Verbindungen beschreibt. So wird in DD-A-203 735 und DD-A-203 734 die Herstellung von Polyetherolen unter Verwendung von Zinkhexacyanocobaltat beschrieben.

Auch die Herstellung der Zinkhexacyanometallate ist bekannt. Üblicherweise erfolgt die Herstellung dieser Katalysatoren, indem Lösungen von Metallsalzen, wie Zinkchlorid, mit Lösungen von Alkali- oder Erdalkalimetallcyanometallaten, wie Kaliumhexacyanocobaltat, umgesetzt werden. Zur entstehenden Fällungssuspension wird in der Regel sofort nach dem Fällungsvorgang eine wassermischbare, Heteroatome enthaltende Komponente zugegeben. Diese Komponente kann auch bereits in einer oder in beiden Eduktlösungen vorhanden sein. Diese wassermischbare, Heteroatome enthaltende Komponente kann beispielsweise ein Ether, Polyether, Alkohol, Keton oder eine Mischung davon sein. Derartige Verfahren sind beispielsweise in US 3,278,457, US 3,278,458, US 3,278,459, US 3,427,256, US 3,427,334, US 3,404,109, US 3,829,505, US 3,941,849, EP 283,148, EP 385,619, EP 654,302, EP 659,798, EP 665,254, EP 743,093, US 4,843,054, US 4,877,906, US 5,158,922, US 5,426,081, US 5,470,813, US 5,482,908, US 5,498,583, US 5,523,386, US 5,525,565, US 5,545,601, JP 7,308,583, JP 6,248,068, JP 4,351,632 und US-A-5,545,601 beschrieben.

In DD-A-148 957 wird die Herstellung von Zinkhexacyanoiridat und dessen Verwendung als Katalysator bei der Polyetheralkoholherstellung beschrieben. Dabei wird als ein Ausgangsstoff Hexacyanoiridiumsäure verwendet. Diese Säure wird als Feststoff isoliert und in dieser Form eingesetzt.

Nachteilig bei der Verwendung von Zinkhexacyanoiridat ist seine Färbung. Auch die unter Verwendung dieses Katalysators hergestellten Polyetheralkohole sind zumeist schwach gelblich gefärbt, was für viele Anwendungen als Qualitätsmangel empfunden wird.

Außerdem ist dieses Verfahren nicht auf die Herstellung anderer Doppelmetallcyanidkomplexe, insbesondere der wesentlich preiswerteren Cyanocobaltate übertragbar, da die Cyanocobaltsäure wesentlich instabiler und als Feststoff kaum handhabbar ist.

Nachteilig bei den Verfahren, bei denen von Cyanometallat-Salzen ausgegangen wird, ist, daß neben dem gewünschten Multimetallcyanidkomplex-Katalysator auch ein Zwangsanfall an Salz, wie Kaliumchlorid bei der Verwendung von Zinkchlorid und Kaliumhexacyanocobaltat, entsteht, welches aus dem Katalysator entfernt werden muß, um eine hohe Aktivität zu erreichen. Da sich durch den Zusatz der organischen Komponenten zur Fällsuspension die Löslichkeit der zu entfernenden Salzen erheblich reduziert, muß der in der Regel sehr feinteilige Katalysator mehrmals mit der organischen Komponente gewaschen werden. Dies führt bei der Produktion von Multimetallcyanidkomplex-Katalysatoren zu einem erheblichen zeitlichen Aufwand und Feststoffverlusten, was für die technische Herstellung von derartigen Katalysatoren prohibitiv sein kann.

Aufgabe der Erfindung war es, ein Verfahren zur Herstellung von Multimetallcyanidkomplex-Katalysatoren zu finden, das ohne zusätzlichen Feststoffanfall auskommt und damit einfacher in der Herstellung ist und das zu Katalysatoren mit hoher Aktivität führt.

Die Aufgabe konnte überraschenderweise gelöst werden durch die Umsetzung von Metallsalzen, insbesondere Metallcarboxylaten, mit Cyanometallwasserstoffsäuren, insbesondere Cyanocobaltwasserstoffsäure zu Multimetallcyanidkomplex-Katalysatoren.

Gegenstand der Erfindung sind demzufolge ein Verfahren zur Herstellung von Multimetallcyanidkomplexsalzen, durch Umsetzung von Metallsalzen, insbesondere Metallcarboxylaten, mit Cyanometallat-Wasserstoffsäure, sowie deren Verwendung als Katalysatoren bei der Herstellung von Polyethern, insbesondere Polyetherolen, durch Polymerisation niederer Alkylenoxide.

Das erfindungsgemäße Verfahren gliedert sich in folgende Verfahrensschritte:
a) Hinzufügen einer wäßrigen Lösung eines wasserlöslichen Metallsalzes der allgemeinen Formel M¹ₘ(X)ₙ, wobei M¹ ein Metallion, ausgewählt aus der Gruppe, enthaltend Zn²⁺, Fe²⁺, Co³⁺, Ni²⁺, Mn²⁺, Co²⁺, Sn²⁺, Pb²⁺, Fe³⁺, Mo⁴⁺, Mo⁶⁺, Al³⁺, V⁵⁺, Sr²⁺, W⁴⁺, W⁶⁺, Cu²⁺, Cr²⁺, Cr³⁺,
   X Carboxylat bedeutet und m und n ganze Zahlen sind, die den Wertigkeiten von M¹ und X genügen,
   zu einer wäßrigen Lösung einer Cyanometallat-Verbindung der allgemeinen Formel HₐM²(CN)_{b}(A)_{c}, wobei M² ein Metallion, ausgewählt aus der Gruppe, enthaltend Fe²⁺, Fe³⁺, Co³⁺, Cr³⁺, Mn²⁺, Mn³⁺, Rh³⁺, Ru²⁺, V⁴⁺, V⁵⁺, Co²⁺ und Cr²⁺ bedeutet und M² gleich oder verschieden M¹ sein kann,
   H Wasserstoff bedeutet,
   A ein Anion, ausgewählt aus der Gruppe, enthaltend Halogenid, Hydroxid, Sulfat, Carbonat, Cyanat, Thiocyanat, Isocyanat, Carboxylat oder Nitrat, insbesondere Cyanid bedeutet, wobei A gleich oder verschieden X sein kann, und a, b und c ganze Zahlen sind, die so ausgewählt sind, daß die Elektroneutralität der Cyanidverbindung gewährleistet ist,
   wobei eine oder beide Lösungen gegebenenfalls mindestens einen wassermischbaren, Heteroatome enthaltenden Liganden enthalten können, der ausgewählt ist aus der Gruppe, enthaltend Alkohole, Aldehyde, Ketone, Ether, Polyether, Ester, Harnstoffe, Amide, Nitrile oder Sulfide,
b) Vereinigen der in Schritt a) gebildeten wäßrigen Suspension mit einem wassermischbaren Heteroatome enthaltenden Liganden, ausgewählt aus der beschriebenen Gruppe, der gleich oder verschieden sein kann dem Liganden aus Schritt a),
c) Abtrennen der Multimetallcyanidverbindung aus der Suspension.

Vorzugsweise wird M¹ ausgewählt aus der Gruppe, enthaltend Zn²⁺, Fe²⁺, Co²⁺ und Ni²⁺, insbesondere wird Zn²⁺ eingesetzt.

X ist Carboxylat.

M² ist vorzugsweise Co²⁺, Co³⁺, Fe²⁺, Fe³⁺, Cr³⁺, Rh³⁺ und Ni²⁺, insbesondere Co³⁺.

Die erfindungsgemäß einsetzbaren Cyanometallat-Wasserstoffsäuren sind in wäßriger Lösung stabil und gut handhabbar. Ihre Herstellung kann beispielsweise, wie in W. Klemm, W. Brandt, R. Hoppe, Z. Anorg. Allg. Chem. 308, 179 (1961) beschrieben, ausgehend vom Alkalicyanometallat über das Silbercyanometallat zur Cyanometallat-Wasserstoffsäure erfolgen. Eine weitere Möglichkeit besteht darin, ein Alkali- oder Erdalkalicyanometallat mittels eines sauren Ionenaustauschers in eine Cyanometallat-Wasserstoffsäure umzuwandeln, wie beispielsweise in F. Hein, H. Lilie, Z. Anorg. Allg. Chem. 270, 45 (1952), oder A. Ludi, H.U. Güdel, V. Dvorak, Helv. Chim. Acta 50, 2035 (1967) beschrieben. Weitere Möglichkeiten zur Synthese der Cyanometallat-Wasserstoffsäuren finden sich beispielsweise in "Handbuch der Präparativen Anorganischen Chemie", G. Bauer (Herausgeber), Ferdinand Enke Verlag, Stuttgart, 1981. Für eine technische Herstellung dieser Verbindungen, wie sie für das erfindungsgemäße Verfahren erforderlich ist, ist die Synthese über Ionenaustauscher der vorteilhafteste Weg. Die Cyanometallat-Wasserstoffsäure-Lösungen können nach der Synthese sofort weiterverarbeitet werden, es ist jedoch auch möglich, sie über einen längeren Zeitraum zu lagern. Eine solche Lagerung sollte unter Lichtausschluß erfolgen, um eine Zersetzung der Säure auszuschließen.

Der Anteil der Säure in der Lösung sollte größer 80 Gew.-%, bezogen auf die Gesamtmasse an Cyanometallat-Komplexen, sein, vorzugsweise größer 90 Gew.-%, insbesondere größer 95 Gew.-% betragen.

Als Heteroatome enthaltende Liganden werden mit Wasser mischbare organische Substanzen verwendet. Als Heteroatome werden hierbei in die Kohlenstoffkette eingebaute Nicht-Kohlenstoffatome, insbesondere Sauerstoff, Schwefel und Stickstoff, verstanden. Bevorzugt eingesetzte Liganden sind Alkohole, Aldehyde, Ketone, Ether, Polyether, Ester, Polyester, Harnstoffe, Amide, Nitrile und Sulfide, vorzugsweise Alkohole, Ketone, Ether, Polyether oder Mischungen davon, besonders bevorzugt Alkohole, Ether, Polyether und Mischungen davon.

Zur Durchführung des erfindungsgemäßen Verfahrens wird eine wäßrige Lösung einer Cyanometallat-Wasserstoffsäure mit der wäßrigen Lösung eines Metallsalzes der allgemeinen Formel M¹ₘ(X)ₙ, wobei die Symbole die oben erläuterte Bedeutung haben, vereinigt. Hierbei wird mit einem stöchiometrischen Überschuß des Metallsalzes gearbeitet. Vorzugsweise wird mit einem molaren Verhältnis des Metallions zur Cyanometallat-Komponente von 1,6 bis 7,0, bevorzugt 1,6 bis 5,0 und besonders bevorzugt von 1,7 bis 3,0 gearbeitet. Es ist die Lösung der Cyanometallat-Wasserstoff säure vorzulegen und die Metallsalzlösung zuzusetzen. Während und nach der Vereinigung der Eduktlösungen ist eine gute Durchmischung, beispielsweise durch Rühren, erforderlich.

Der Gehalt der Cyanometallat-Wasserstoffsäure in der Lösung beträgt 0,1 bis 30 Gew.-%, bevorzugt 1 bis 20 Gew.-%, insbesondere 2 bis 10 Gew.-%, der Gehalt der Metallsalzkomponete in der Lösung beträgt 1 bis 50 Gew.-%, bevorzugt 2 bis 40 Gew.-%, insbesondere 5 bis 30 Gew.-%.

Die Heteroatome enthaltenden Liganden werden insbesondere nach der Vereinigung der beiden Eduktlösungen zu der entstehenden Suspension gegeben, wobei auch hier auf eine gute Durchmischung zu achten ist.

Es ist jedoch auch möglich, den Liganden ganz oder teilweise einer oder beiden Eduktlösungen zuzufügen. Dabei sollte man, aufgrund der Veränderung der Salzlöslichkeiten, den Liganden vorzugsweise der Cyanometallat-Wasserstoffsäure-Lösung zusetzen.

Der Gehalt der Liganden in der Suspension sollte 1 bis 60 Gew.-%, vorzugsweise 5 bis 40 Gew.-%, insbesondere 10 bis 30 Gew.-% betragen.

Nach Zusatz der Liganden werden die entstandenen Doppelmetallcyanid-Komplexe von der wäßrigen Phase abgetrennt. Dies kann mittels üblicher und bekannter Trennverfahren erfolgen, beispielsweise durch Filtration oder Zentrifugieren.

Das Vermischen der Edukte kann bei Temperaturen zwischen 10 und 80°C erfolgen, bevorzugt ist ein Temperaturbereich von 15 bis 60°C, besonders bevorzugt von 20 bis 50°C.

Danach werden die Multimetallcyanid-Komplexe getrocknet. Die Trocknung kann bei Raumtemperatur und Normaldruck erfolgen. Bevorzugt wird die Trocknung jedoch bei Temperaturen von 20 bis 60°C und unter Drücken von 0,01 bis 1 bar. Besonders bevorzugt sind Temperaturen von 20 bis 50°C und Drücke von 0,05 bis 0,7 bar.

Nach dem Abtrennen und Trocknen können die Katalysatoren nochmals mit der wäßrigen Lösung der Liganden behandelt, abgetrennt und getrocknet werden.

Die nach dem erfindungsgemäßen Verfahren hergestellten Multimetallcyanid-Komplexe können insbesondere als Katalysatoren bei der Herstellung von Polyetherolen durch Polymerisation niederer Alkylenoxide, insbesondere Ethylenoxid und/oder Propylenoxid, mit einem im Vergleich zu der Verwendung anderer Katalysatoren deutlich verringerten Anteil an ungesättigten Anteilen, verwendet werden.

Im Vergleich zur Herstellung der Multimetallcyanidkomplex-Katalysatoren nach dem Verfahren gemäß dem Stand der Technik durch Umsetzung der Metallsalze mit Cyanometallat-Salzen besitzt das erfindungsgemäße Verfahren Vorteile. So entsteht kein zusätzliches Salz aus dem Kation des Cyanometallat-Salzes und dem Anion des Metallsalzes, das aus dem Katalysator entfernt werden muß. Damit kann die Zahl der Waschungen deutlich verringert und das Herstellungsverfahren effektiver gestaltet werden. Aufgrund des verringerten Gehaltes an katalytisch inaktiven Beimengungen sind die nach dem erfindungsgemäßen Verfahren hergestellten Katalysatoren aktiver als die des Standes der Technik. Aufgrund ihrer hohen Aktivität können sie in Mengen von weniger als 0,5 Gew.-%, vorzugsweise kleiner 500 ppm, besonders bevorzugt kleiner 250 ppm, bezogen auf das Gewicht des Polyetheralkohols, eingesetzt werden.

Die erfindungsgemäß hergestellten Katalysatoren besitzen, im Gegensatz zu denen des Standes der Technik, insbesondere gemäß EP-A-654 302 und EP-A-743 093, einen hohen Anteil an kristallinen Bereichen. Trotzdem sind sie hochaktiv und haben eine sehr geringe Inkubationszeit. Möglicherweise hängen die Unterschiede in der Struktur mit dem durch die Verwendung der Cyanometallat-Wasserstoffsäure bedingten Unterschied im pH-Wert der Reaktionsmischung bei der Herstellung der Katalysatoren zusammen.

Die Erfindung soll an nachstehenden Beispielen näher erläutert werden.

### Beispiel 1

200 ml stark saurer Ionenaustauscher K 2431 der Fa. Bayer AG wurden mit 80 g 37 %iger Salzsäure regeneriert und mit Wasser so lange gewaschen, bis der Ablauf neutral war. Danach wurde eine Lösung von 17,8 g Kaliumhexacyanocobaltat in 100 ml Wasser auf die Austauschersäule gegeben. Die Säule wurde danach so lange eluiert, bis der Auslauf wieder neutral war. Die so gewonnenen 368 g Eluat wurden auf 40°C erwärmt und unter Rühren eine Lösung von 20,0 g Zinkacetat in 100 ml Wasser zugegeben. Die entstehende Suspension wurde bei 40°C weitere 10 Minuten gerührt. Danach wurden 84 g Ethylenglykoldimethylether zugegeben und die Lösung bei 40°C weitere 30 Minuten gerührt. Danach wurde der Feststoff abgesaugt und auf dem Filter mit 300 ml Ethylenglykoldimethylether gewaschen. Der so behandelte Feststoff wurde bei Raumtemperatur getrocknet. Mittels Atomabsorptionsspektroskopie wurde der Kaliumgehalt bestimmt. Es konnte kein Kalium nachgewiesen werden (Nachweisgrenze 10 ppm).

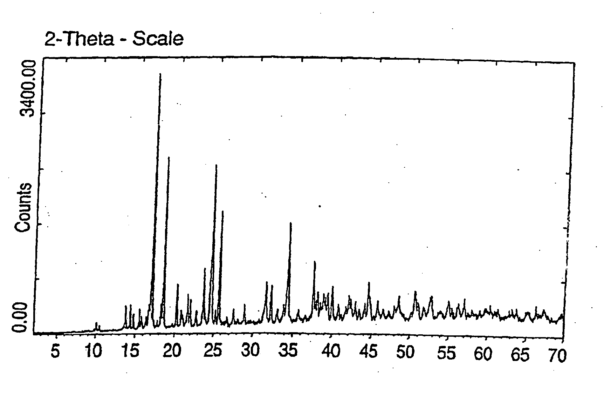

In Bild 1 ist das Röntgendiffraktogramm des erhaltenen Feststoffes wiedergegeben. Das Diffraktogramm wurde mittels eines Diffraktometers D 5000 der Firma Siemens aufgenommen (Strahlung Cu-K_{α}).

Aus dem Diffraktogramm ist die gute Kristallinität der Probe zu ersehen.

### Beispiel 2

200 ml des in Beispiel 1 beschriebenen Ionenaustauschers wurden mit zweimal 80 g 37 %iger Salzsäure wie in Beispiel 1 beschrieben regeneriert. Danach wurde eine Lösung von 16,8 g Kaliumhexacyanocobaltat in 100 ml Wasser auf die Austauschersäule gegeben und danach die Säule so lange eluiert, bis der Auslauf neutral war. Die erhaltenen 352 g Eluat wurden auf 40°C erwärmt, mit 42 g Ethylenglykoldimethylether versetzt und unter Rühren eine Lösung von 20 g Zinkacetat in 70 ml Wasser dazugegeben. Die entstandene Suspension wurde bei 40°C weitere 10 Minuten gerührt. Danach wurde 42 g Ethylenglykoldimethylether zugegeben und die Suspension bei 40°C weitere 30 Minuten gerührt. Danach wurde der Feststoff abgesaugt und auf dem Filter mit 300 ml Ethylenglykoldimethylether gewaschen. Der so behandelte Feststoff wurde bei Raumtemperatur getrocknet. Mittels Atomabsorptionsspektroskopie wurde der Kaliumgehalt bestimmt. Es konnte kein Kalium nachgewiesen werden (Nachweisgrenze 10 ppm).

### Vergleichsbeispiel 1

6,5 g Kaliumhexacyanocoboltat, in 130 ml Wasser gelöst, wurden auf 40°C temperiert. Dazu gab man unter Rühren eine Lösung aus 13,3 g Zinkchlorid in 15 g Wasser. Die erhaltene Suspension wurde 15 min bei 40°C gerührt, danach werden 42,0 g Ethylenglykoldimethylether hinzugegeben und die Suspension bei 40°C weitere 30 min gerührt. Danach wurde der Festkörper abgesaugt und auf dem Filter mit 150 ml Ethylenglykoldimethylether gewaschen und bei Raumtemperatur getrocknet. Der Kalium- und Chloridgehalt des so erhaltenen Festkörpers wurde analytisch untersucht. Der Kaliumgehalt betrug 0,62 Gew.-%, der Chloridgehalt 6,4 Gew.-%

### Vergleichsbeispiel 2

6,5 g.Kaliumhexacyanocobaltat, in einem Gemisch aus 130 ml Wasser und 21,0 g Ethylenglykoldimethylether gelöst, wurden auf 40°C temperiert. Dazu gab man unter Rühren eine Lösung aus 13,3 g Zinkchlorid in 15 g Wasser. Die erhaltene Suspension wurde 15 min bei 40°C gerührt, danach wurden die restlichen 21,0 g Ethylenglykoldimethylether hinzugegeben und die Suspension bei 40°C weitere 30 min gerührt. Danach wurde der Festkörper abgesaugt und auf dem Filter mit 150 ml Ethylenglykoldimethylether gewaschen und bei Raumtemperatur getrocknet. Der Kalium- und Chloridgehalt des so erhaltenen Festkörpers wurde analytisch untersucht. Der Kaliumgehalt betrug 2,1 Gew.-%, der Chloridgehalt 9,3 Gew.-%.

### Synthese von Polyetherpolyolen

In den folgenden Beispielen wurde als Starter ein Oligopropylenglykol benutzt, das durch eine alkalisch katalysierte Umsetzung von Dipropylenglykol mit Propylenoxid bei 105°C erhalten wurde. Dieses Oligopropylenglykol wurde mittels eines Magnesiumsilikates vom Katalysator befreit. Es hatte eine Hydroxyzahl von 280 mg KOH/g; einen Gehalt an ungesättigten Bestandteilen von 0,003 meq/g, einen Natrium- und Kaliumgehalt von kleiner 1 ppm.

Die Bestimmung der Hydroxylzahl erfolgte nach ASTM D 2849, die der ungesättigten Bestandteile nach ASTM 4671 der Metallgehalte mittels Atomabsorptionspektroskopie.

### Beispiel 3

509 g des Oligopropylenglykols wurden mit 1,25 g des Katalysators aus Beispiel 1 (entsprechen 500 ppm bezogen auf das Fertigprodukt) in einem Rührautoklaven unter Stickstoffatmosphäre vermischt. Nach dem Evakuieren des Kessels wurden bei 105°C 150 g Propylenoxid zudosiert. Das fast sofortige Anspringen der Reaktion wurde erkannt an einem nur kurzzeitigen Druckanstieg auf 2,5 bar, der von einem sofortigen Druckabfall gefolgt war. Nach 10 min lag kein freies Propylenoxid im Reaktor vor. Sodann wurden bei derselben Temperatur 1824 g Propylenoxid so zugefahren, daß ein Druck von 2,6 bar abs. nicht überschritten wurde. Bereits nach 30 min war die Dosierphase beendet, nach weiteren 4 min war, wie an dem Drucksignal erkannt werden konnte, die Abreaktionsphase beendet.

Das so erhaltene Polyetherol wurde einmal filtriert, wobei ein Tiefenfilter verwendet wurde. Das Polyol hatte eine Hydroxylzahl von 56,6 mg KOH/g, einen Gehalt an ungesättigten Bestandteilen von 0,0074 meq/g, einen Zinkgehalt von 30 ppm und einen Cobaltgehalt von 14 ppm.

### Beispiel 4

512 g des Oligopropylenglykols wurden mit 0,25 g des Katalysators aus Beispiel 1 (entsprechend 100 ppm bezogen auf das Fertigprodukt) in einem Rührautoklaven unter Stickstoffatmosphäre vermischt. Nach dem Evakuieren des Kessels wurden bei 105°C 150 g Propylenoxid zudosiert. Das Anspringen der Reaktion wurde erkannt an dem nach ca. 30 min. einstzenden Abfall des Druckes, der nach der Alkylenoxiddosierung zunächst 2,7 bar betrug. Nach dem vollständigen Abreagieren des Propylenoxides wurden weitere 1844 g Propylenoxid bei derselben Temperatur so zugefahren, daß ein Druck von 2,8 bar nicht überschritten wurde. Bereits nach 35 min war die Dosierphase beendet, nach weiteren 10 min war, wie an dem Drucksignal erkannt werden konnte, die Abreaktionsphase beendet.

Das so erhaltene Polyetherol wurde einmal filtriert. Es hatte eine Hydroxylzahl von 57,3 mg KOH/g, einen Gehalt an ungesättigten Bestandteilen von 0,0103 meq/g, einen Zinkgehalt von kleiner 5 ppm und einen Cobaltgehalt von kleiner 5 ppm.

### Beispiel 5

521 g des Oligopropylenglykols werden mit 0,50 g des Katalysators aus Beispiel 2 (entsprechend 200 ppm bezogen auf das Fertigprodukt) in einem Rührautoklaven unter Stickstoffatmosphäre vermischt. Nach dem Evakuieren des Kessels wurden bei 105°C 150 g Propylenoxid zudosiert. Das Anspringen der Reaktion wurde erkannt an dem nach 20 min. einsetzenden Abfall des Druckes, der nach der Alkylenoxiddosierung zunächst 2,7 bar abs. betrug. Nach dem vollständigen Abreagieren des Propylenoxides wurden weitere 1990 g Propylenoxid bei derselben Temperatur so zugefahren, daß ein Druck von 5,3 bar nicht überschritten wurde. Nach 60 min war die Dosierphase beendet.

### Vergleichsbeispiel 3

512 g des Oligopropylenglykols wurden mit 0,25 g des Katalysators aus Vergleichsbeispiel 1 (entsprechend 100 ppm bezogen auf das angestrebte Fertigprodukt) in einem Rührautoklaven unter Stickstoffatmosphäre vermischt. Nach dem Evakuieren des Kessels wurden bei 105°C 150 g Propylenoxid zudosiert. Das Anspringen der Reaktion wurde erkannt an dem nach 40 min. einsetzenden Abfall des Druckes von 2,9 bar. Der Druckabfall erfolgte nur langsam. Nach dem vollständigen Abreagieren des Propylenoxides wurde mit der Dosierung von weiteren 1851 g Propylenoxid bei derselben Temperatur begonnen. Während der Dosierung wurde ein Druckanstieg auf zunächst 4,1 bar abs. beobachtet, der später weiter auf 4,5 bar abs. anstieg und auch nach Dosierende nicht wieder abfiel. Wegen Einschlafens der Reaktion mußte aus dem Reaktionsgemisch nicht reagiertes Propylenoxid entfernt werden.

Das erhaltene Polyetherol wurde einmal filtriert. Es hatte eine Hydroxylzahl von 68,6 mg KOH/g, einen Gehalt an ungesättigten Bestandteilen von 0,0128 meq/g, einen Zinkgehalt von 24 ppm und einen Cobaltgehalt von 11 ppm.

### Vergleichsbeispiel 4

521 g des Oligopropylenglykols wurden mit 0,5 g des Katalysators aus Vergleichsbeispiel 2 (entsprechend 200 ppm bezogen auf das angestrebte Fertigprodukt) in einem Rührautoklaven unter Stickstoffatmosphäre vermischt. Nach dem Evakuieren des Kessels wurden bei 105°C 150 g Propylenoxid zudosiert. Ein Druckabfall wurde erst nach ca. 60 min beobachtet und erfolgte nur langsam. Nach dem vollständigen Abreagieren des Propylenoxides wurde mit der Dosierung von Propylenoxid bei derselben Temperatur begonnen. Während der Dosierung wurde ein deutlicher Druckanstieg beobachtet, der auch bei Unterbrechung des Monomerzulaufs nicht wieder absank. Wegen des Einschlafens der Reaktion mußte aus dem Reaktionsgemisch nicht reagiertes Propylenoxid entfernt werden.

## Patentansprüche

1. Verfahren zur Herstellung von Doppelmetallcyanidkatalysatoren, **dadurch gekennzeichnet, daß**
eine wäßrige Lösung eines Metallsalzes der allgemeinen Formel M¹ₘ(X)ₙ, wobei
M¹ ein Metallion, ausgewählt aus der Gruppe, bestehend aus Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cr(II), Cr(III),
X Carboxylat bedeutet
und m und n sich aus den Wertigkeiten von M¹ und X ergeben, mit einer wäßrigen Lösung einer Cyanometallatsäure der allgemeinen Formel HₐM²(CN)_{b}(A)_{c}, wobei M² ein Metallion, ausgewählt aus der Gruppe, enthaltend Fe(II), Fe(III), Co(III), Cr(III), Mn(II), Mn(III), Rh(III), Ru(II), V(IV), V(V), Co(II), und Cr(II), wobei M² gleich oder verschieden M¹ sein kann,
A ein Anion ausgewählt aus der Gruppe, enthaltend Halogenid, Hydroxid, Sulfat, Carbonat, Cyanid, Thiocyanat, Isocyanat, Cyanat, Carboxylat, Oxalat oder Nitrat bedeuten, wobei A gleich oder verschieden X sein kann
a, b und c ganze Zahlen
bedeuten und so gewählt sind, daß die Cyanidverbindung elektroneutral ist,
wobei eine oder beide wäßrige Lösungen mindestens einen wassermischbaren organischen Liganden, ausgewählt aus der Gruppe, enthaltend Alkohole, Aldehyde, Ketone, Ether, Polyether, Ester, Harnstoffe, Amide, Nitrile oder Sulfide, enthalten kann,
zusammengeführt, die so erhaltene wäßrige Suspension gegebenenfalls mit mindestens einem wassermischbaren organischen Liganden, ausgewählt aus der obengenannte Gruppe, der gleich oder verschieden dem gegebenenfalls vorher zugesetzten Liganden sein kann, vereinigt, wobei die Lösung der Cyanometallatsäure vorgelegt und Metallsalzlösung zugesetzt wird, und die erhaltene Doppelmetallcyanidkomplexverbindung aus der Suspension abgetrennt wird.

2. Verfahren nach Anspruch 1, **dadurch gekennzeichnet, daß** M¹ ausgewählt ist aus der Gruppe, enthaltend Zn(II), Fe(II), Co(II) und Ni(II).

3. Verfahren nach einem der Ansprüche 1 bis 2, **dadurch gekennzeichnet, daß** M² ausgewählt aus der Gruppe, enthaltend Co(II), Co(III), Fe(II), Fe(III), Ni(II) und Cr(III).

4. Verfahren nach einem der Ansprüche 1 bis 3, **dadurch gekennzeichnet, daß** M² Co(III) ist.

5. Verfahren nach einem der Ansprüche 1 bis 4, **dadurch gekennzeichnet, daß** als wassermischbare Liganden Sauerstoff enthaltende Verbindungen verwendet werden.

6. Verfahren nach einem der Ansprüche 1 bis 5, **dadurch gekennzeichnet, daß** als wassermischbare Liganden Alkohole, Ether, Polyether, Ketone oder Mischungen daraus verwendet werden.

7. verfahren nach einem der Ansprüche 1 bis 6, **dadurch gekennzeichnet, daß** die aus Suspension abgetrennte Doppelmetallcyanidkomplexverbindung nochmals mit einer wäßrigen Lösung des Liganden behandelt wird.

8. Verfahren nach einem der Ansprüche 1 bis 7, **dadurch gekennzeichnet, daß** die aus der Suspension abgetrennte Doppelmetallcyanidverbindung nochmals mit dem reinen Liganden behandelt wird.

9. Verfahren zur Herstellung von Polyetheralkoholen durch katalytische Polymerisation von Alkylenoxiden, **dadurch gekennzeichnet, daß** als Katalysatoren Doppelmetallcyanidkomplexkatalysatoren, herstellbar nach einem der Ansprüche 1 bis 8, eingesetzt werden.

## Claims

1. A process for preparing two-metal cyanide catalysts, which comprises
combining an aqueous solution of a metal salt of the formula M¹ₘ(X)ₙ, where
M¹ is a metal ion selected from the group consisting of Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cr(II), Cr(III),
X is carboxylate
and m and n are derived from the valences of M¹ and X,
with an aqueous solution of a cyanometalic acid of the formula HₐM²(CN)_{b}(A)_{c}, where M² is a metal ion selected from the group consisting of Fe(II), Fe(III), Co(III), Cr(III), Mn(II), Mn(III), Rh(III), Ru(II), V(IV), V(V), Co(II) and Cr(II), where M² can be identical to or different from M¹,
A is an anion selected from the group consisting of halide, hydroxide, sulfate, carbonate, cyanide, thiocyanate, isocyanate, cyanate, carboxylate, oxalate or nitrate, where A can be identical to or different from X,
a, b and c are integers
and are selected such that the cyanide compound is electrically neutral,
where one or both aqueous solutions may comprise at least one water-miscible organic ligand selected from the group consisting of alcohols, aldehydes, ketones, ethers, polyethers, esters, ureas, amides, nitriles or sulfides,
if appropriate combining the aqueous suspension thus obtained with at least one water-miscible organic ligand selected from the abovementioned group, which ligand may be identical to or different from any previously added ligand, the solution of the cyanometalic acid being placed in the reaction vessel and metal salt solution being added, and separating the resulting two-metal cyanide complex from the suspension.

2. The process according to claim 1, wherein M¹ is selected from the group consisting of Zn(II), Fe(II), Co(II) and Ni(II).

3. The process according to either of claims 1 and 2, wherein M² is selected from the group consisting of Co(II), Co(III), Fe(II), Fe(III), Ni(II) and Cr(III).

4. The process according to any of claims 1 to 3, wherein M² is Co(III).

5. The process according to any of claims 1 to 4, wherein the water-miscible ligands used are oxygen-comprising compounds.

6. The process according to any of claims 1 to 5, wherein the water-miscible ligands used are alcohols, ethers, polyethers, ketones or mixtures thereof.

7. The process according to any of claims 1 to 6, wherein the two-metal cyanide complex separated from the suspension is treated again with an aqueous solution of the ligand.

8. The process according to any of claims 1 to 7, wherein the two-metal cyanide compound separated from the suspension is treated again with the pure ligand.

9. A process for preparing polyether alcohols by catalytic polymerization of alkylene oxides, wherein the catalysts used are two-metal cyanide complex catalysts which can be prepared according to any of claims 1 to 8.

## Revendications

1. Procédé pour la préparation de catalyseurs à base de cyanures bimétalliques, **caractérisé en ce que**
on réunit une solution aqueuse d'un sel métallique de formule générale M¹ₘ(X)ₙ, dans laquelle
M¹ représente un ion métallique choisi dans le groupe constitué par Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cr(II), Cr(III),
X représente un anion carboxylate
et m et n résultent des valences de M¹ et X,
avec une solution aqueuse d'un acide cyanométallate de formule générale HₐM²(CN)_{b}(A)_{c},
dans laquelle M² est un ion métallique choisi dans le groupe constitué par Fe(II), Fe(III), Co(III), Cr(III), Mn(II), Mn(III), Rh(III), Ru(II), V(IV), V(V), Co(II) et Cr(II), M² pouvant être identique à M¹ ou différent de M¹,
A représente un anion choisi dans le groupe comportant en les anions halogénure, hydroxyde, sulfate, carbonate, cyanure, thiocyanate, isocyanate, cyanate, carboxylate, oxalate et nitrate, A pouvant être identique à X ou différent de X,
a, b, c représentent des nombres entiers et sont choisis de manière que le cyanure soit électriquement neutre,
l'une des deux solutions aqueuses ou les deux pouvant contenir au moins un ligand organique miscible à l'eau, choisi dans le groupe comprenant des alcools, des aldéhydes, des cétones, des éthers, des polyéthers, des esters, des urées, des amides, des nitriles et des sulfures,
on réunit éventuellement la suspension aqueuse ainsi obtenue avec au moins un ligand organique miscible à l'eau, choisi dans le groupe indiqué ci-dessus, qui peut être identique au ligand éventuellement ajouté précédemment ou différent de celui-ci, la solution de l'acide cyanométallate étant disposée au préalable et la solution de sel métallique étant ajoutée, et on sépare le composé complexe de cyanure bimétallique obtenu de la solution.

2. Procédé selon la revendication 1, **caractérisé en ce que** M¹ est choisi dans le groupe comportant Zn(II), Fe(II), Co (II) et Ni (II).

3. Procédé selon la revendication 1 ou 2, **caractérisé en ce que** M² est choisi dans le groupe comportant CO(II), CO(III), Fe(II), FE(III), Ni(II) et Cr(III).

4. Procédé selon l'une quelconque des revendications 1 à 3, **caractérisé en ce que** M² est Co(III).

5. Procédé selon l'une quelconque des revendications 1 à 4, **caractérisé en ce qu'**on utilise en tant que ligands miscibles à l'eau des composés contenant de l'oxygène.

6. Procédé selon l'une quelconque des revendications 1 à. 5, **caractérisé en ce qu'**on utilise en tant que ligands miscibles à l'eau des alcools, des éthers, des polyéthers, des cétones ou des mélanges de ceux-ci.

7. Procédé selon l'une quelconque des revendications 1 à 6, **caractérisé en ce que** le composé complexe de cyanure bimétallique séparé de la suspension est traité encore une fois par une solution aqueuse du ligand.

8. Procédé selon l'une quelconque des revendications 1 à 7, **caractérisé en ce que** le composé complexe de cyanure bimétallique séparé de la suspension est traité encore une fois par le ligand pur.

9. Procédé pour la préparation de polyéther-alcools par polymérisation catalytique d'oxydes d'alkylène, **caractérisé en ce qu'**on utilise comme catalyseurs des catalyseurs à base de complexes de cyanures bimétalliques, pouvant être préparés selon l'une quelconque des revendications 1 à 8.
